# EUROPEAN PATENT APPLICATION

(11) **EP 3 572 264 A1**
(43) Date of publication of application: **27.11.2019**
(21) Application number: 19174049.7
(22) Date of filing: 13.05.2019
(51) Int. Cl.: B60K 11/02

(54) **ELECTRIC POWERTRAIN, METHOD OF CONTROLLING TEMPERATURE OF COOLANT OF ELECTRIC POWERTRAIN, AND RELATED DEVICES**

(30) Priority: 21.05.2018 SE 1850592
(71) Applicant: Scania CV AB, 151 87 Södertälje (SE)
(72) Inventor: EVERATT, Grant, 120 58 Årsta (SE); STRÖM, David, 144 62 Rönninge (SE)
(74) Representative: Scania CV AB

(57) **Abstract**

An electric powertrain (1) for a vehicle (2) is disclosed. The powertrain (1) comprises an electric machine (3), electronic components (5, 7) configured to power the electric machine (3), a first coolant circuit (11) configured to cool the electric machine (3), and a second coolant circuit (12) configured to cool the electronic components (5, 7). Furthermore, the powertrain (1) comprises a heat exchanger (20) configured to exchange heat between the first and second coolant circuits (11, 12). The present disclosure further relates to a vehicle (2), a method (100) of controlling temperature of coolant of an electric powertrain (1), a computer program, and a computer-readable medium (200).

## Description

### TECHNICAL FIELD

The present disclosure relates to an electric powertrain for a vehicle. The present disclosure further relates to vehicle comprising an electric powertrain and a method of controlling temperature of coolant of an electric powertrain. Furthermore, the present disclosure relates to a computer program and a computer-readable medium.

### BACKGROUND

An electric powertrain is a powertrain for a vehicle comprising one or more electric machines for propulsion of the vehicle. Electric powertrains may be fully electric powertrains or a type of hybrid powertrain that combines an internal combustion engine with an electric propulsion system. Vehicles that comprise a hybrid powertrain are usually referred to as hybrid electric vehicles. Vehicles comprising an electric powertrain comprise electronic components, such as batteries and power electronics, configured to power the electric machine of the electric powertrain.

An electric machine of an electric powertrain is usually cooled and lubricated by a coolant circuit, which usually comprises oil as coolant. Problem associated with electric powertrains are that when a vehicle comprising the powertrain is parked in a cold environment for an extended period, the viscosity of the coolant increases. Thereby, the coolant may be difficult to pump through the coolant circuit and the pumping thereof may create harmful pressure peaks when the powertrain is started.

### SUMMARY

It is an object of the present invention to overcome, or at least alleviate, at least some of the above-mentioned problems and drawbacks.

According to a first aspect of the invention, the object is achieved by an electric powertrain for a vehicle. The powertrain comprises an electric machine, electronic components configured to power the electric machine, a first coolant circuit configured to cool the electric machine, and a second coolant circuit configured to cool the electronic components. The powertrain further comprises a heat exchanger configured to exchange heat between the first and second coolant circuits.

Thereby, a powertrain is provided capable of heating coolant in the first coolant circuit, in an energy efficient manner, using waste heat from the electronic components. In this manner, the viscosity of the coolant in the first coolant circuit can be lowered, using waste heat from the electronic components, i.e. in a manner circumventing the need for input of additional heat. Thereby, in a subsequent start-up phase of the powertrain, the coolant in the first coolant circuit can be pumped with lower resistance through the first coolant circuit and the risk for harmful pressure peaks is reduced. As a further result thereof, a more reliable powertrain is provided.

Furthermore, since the powertrain is capable of heating coolant in the first coolant circuit in an energy efficient manner, using waste heat from the electronic components, and since the coolant in the first coolant circuit can be pumped with lower resistance, a more environmentally friendly powertrain is provided.

Accordingly, a powertrain is provided overcoming, or at least alleviating, at least some of the above-mentioned problems and drawbacks. As a result, the above-mentioned object is achieved.

Optionally, the electronic components comprise a battery, and wherein the powertrain is configured to transfer heat from the second coolant circuit to the first coolant circuit during charging of the battery. Thereby, a powertrain is provided utilizing the waste heat obtained during charging of the battery to heat coolant in the first coolant circuit, i.e. in a manner circumventing the need for input of additional heat. As a further result thereof, the coolant in the first coolant circuit can be pumped with lower resistance through the first coolant circuit, and the risk for harmful pressure peaks is reduced, in a subsequent start-up of the powertrain.

Optionally, the powertrain comprises an expansion tank fluidly connected to the second coolant circuit. Thereby, unwanted pressure build-ups in the second coolant circuit are avoided.

Optionally, the heat exchanger comprises a first and a second passage, and wherein the first passage is arranged to conduct coolant flowing in the first coolant circuit, and the second passage is arranged to conduct coolant flowing in the second coolant circuit. Thereby, a simple and efficient heat exchanger is provided.

Optionally, the expansion tank is fluidly connected to the second passage. Thereby, unwanted pressure build-ups are avoided in the second passage of the heat exchanger.

Optionally, the first passage is arranged to conduct coolant in a first flow direction and the second passage is arranged to conduct coolant in a second flow direction, and wherein the second flow direction is opposite to the first flow direction. Thereby, an increased heat transfer is provided between the second and first coolant circuits.

Optionally, the first and second passages are coaxially arranged. Thereby, an efficient heat transfer is provided between the second and first coolant circuits, while the heat exchanger has conditions and/or characteristics suitable for being manufactured in a cost-efficient manner. Furthermore, conditions are provided for an efficient utilization of space in a compartment of a vehicle housing the powertrain.

Optionally, the second passage is coaxially arranged around the first passage. Thereby, a still further efficient heat transfer can be provided between the second and first passages, in embodiments where a cross sectional area of the first passage is greater than a cross sectional area of the second passage. Since the first coolant circuit is configured to cool the electric machine, the first coolant circuit may be arranged to conduct coolant at a higher flow rate than the second coolant circuit. Therefore, the first passage of the heat exchanger may be provided with a greater cross-sectional area than the second passage. Thus, by arranging the second passage coaxially around the first passage, a greater surface area between the first and second passages is provided in such embodiments, than would be the case otherwise, which thus increases heat transfer between the second and first passages.

Optionally, the heat exchanger is a double jacketed pipe. Thereby, an efficient heat transfer is provided between the second and first passages, while conditions are provided for an efficient utilization of space in a compartment of a vehicle housing the powertrain. In addition, a powertrain is provided having conditions and characteristics suitable for being manufactured and assembled in a cost-efficient manner.

Optionally, the second coolant circuit comprises a circulation pump, wherein the powertrain comprises a control arrangement configured to estimate a temperature of coolant in the first coolant circuit, and wherein the control arrangement is configured to activate the circulation pump of the second coolant circuit in case the estimated temperature is below a first threshold temperature. Thereby, a powertrain is provided which may heat the coolant in the first coolant circuit, in an energy efficient manner, when needed, i.e. when the estimated temperature is below the first threshold temperature. In this manner, an even more energy efficient and environmentally friendly powertrain is provided.

Optionally, the first coolant circuit comprises a circulation pump, and wherein the control arrangement is configured to activate the circulation pump of the first coolant circuit when the estimated temperature of coolant in the first coolant circuit rises above a second threshold temperature. Thereby, the circulation pump of the first coolant circuit can be started in a safe manner with a reduced risk of harmful pressure peaks. In addition, because of the activation of the circulation pump of the first coolant circuit, a more even heat distribution in the coolant of the first coolant circuit can be provided.

According to a second aspect of the invention, the object is achieved by a vehicle comprising an electric powertrain according to some embodiments.

Since the vehicle comprises a powertrain according to some embodiments, a vehicle is provided capable of heating coolant in a first coolant circuit of the powertrain, in an energy efficient manner, using waste heat from electronic components of the powertrain. In this manner, the viscosity of the coolant in the first coolant circuit can be lowered, using waste heat from the electronic components, i.e. in a manner circumventing the need for input of additional heat. Thereby, in a subsequent start-up phase of the powertrain of the vehicle, the coolant in the first coolant circuit can be pumped with lower resistance through the first coolant circuit and the risk for harmful pressure peaks is reduced. As a further result thereof, a more reliable vehicle is provided.

Furthermore, since the powertrain of the vehicle is capable of heating coolant in the first coolant circuit in an energy efficient manner, using waste heat from the electronic components, and since the coolant in the first coolant circuit can be pumped with lower resistance, a more environmentally friendly vehicle is provided.

Accordingly, a vehicle is provided overcoming, or at least alleviating, at least some of the above-mentioned problems and drawbacks. As a result, the above-mentioned object is achieved.

According to a third aspect of the invention, the object is achieved by a method of controlling temperature of coolant of an electric powertrain, wherein the powertrain comprises:
- an electric machine,
- a battery configured to power the electric machine,
- a first coolant circuit configured to cool the electric machine,
- a second coolant circuit configured to cool the battery, and
- a heat exchanger configured to exchange heat between the first and second coolant circuits,
and wherein the method comprises the steps of:
- estimating a temperature of coolant in the first coolant circuit, and
- transferring heat from the second coolant circuit to the first coolant circuit in case the battery is charging and the estimated temperature is below a first threshold temperature.

Thereby, a method is provided capable of heating coolant in the first coolant circuit, in an energy efficient manner, using waste heat from the battery. In this manner, the viscosity of the coolant in the first coolant circuit can be lowered, using waste heat from the battery, i.e. in a manner circumventing the need for input of additional heat. Thereby, in a subsequent start-up phase of the powertrain, the coolant in the first coolant circuit can be pumped with lower resistance through the first coolant circuit and the risk for harmful pressure peaks is reduced.

Furthermore, since the coolant in the first coolant circuit is heated in an energy efficient manner, using waste heat from the battery, and since the coolant in the first coolant circuit can be pumped with lower resistance, a more environmentally friendly method is provided.

Accordingly, a method is provided overcoming, or at least alleviating, at least some of the above-mentioned problems and drawbacks. As a result, the above-mentioned object is achieved.

Optionally, the second coolant circuit comprises a circulation pump, and wherein the step of transferring heat from the second coolant circuit to the first coolant circuit comprises the step of:
- activating the circulation pump of the second coolant circuit.

Thereby, heat is transferred from the second coolant circuit to the first coolant circuit in a simple and efficient manner.

Optionally, the first coolant circuit comprises a circulation pump, and wherein the method further comprises the step of:
- activating the circulation pump of the first coolant circuit when the estimated temperature of coolant in the first coolant circuit rises above a second threshold temperature.

Thereby, the circulation pump of the first coolant circuit can be started in a safe manner with a reduced risk of harmful pressure peaks. In addition, the activation of the circulation pump of the first coolant circuit may facilitate heat transfer between coolant in the first coolant circuit to thereby obtain a more even heat distribution in the coolant in the first coolant circuit.

According to a fourth aspect of the invention, the object is achieved by a computer program comprising instructions which, when the program is executed by a computer, cause the computer to carry out the method according to some embodiments. Since the computer program comprises instructions which, when the program is executed by a computer, cause the computer to carry out the method according to some embodiments, a computer program is provided which provides conditions for overcoming, or at least alleviating, at least some of the above-mentioned drawbacks. As a result, the above-mentioned object is achieved.

According to a fifth aspect of the invention, the object is achieved by a computer-readable medium comprising instructions which, when executed by a computer, cause the computer to carry out the method according to some embodiments. Since the computer-readable medium comprises instructions which, when the program is executed by a computer, cause the computer to carry out the method according to some embodiments, a computer-readable medium is provided which provides conditions for overcoming, or at least alleviating, at least some of the above-mentioned drawbacks. As a result, the above-mentioned object is achieved.

Further features of, and advantages with, the present invention will become apparent when studying the appended claims and the following detailed description.

### BRIEF DESCRIPTION OF THE DRAWINGS

Various aspects of the invention, including its particular features and advantages, will be readily understood from the example embodiments discussed in the following detailed description and the accompanying drawings, in which:
- Fig. 1: schematically illustrates an electric powertrain, according to some embodiments,
- Fig. 2: illustrates a vehicle, according to some embodiments,
- Fig. 3: illustrates a method of controlling temperature of coolant of an electric powertrain, and
- Fig. 4: illustrates computer-readable medium, according to some embodiments.

### DETAILED DESCRIPTION

Aspects of the present invention will now be described more fully. Like numbers refer to like elements throughout. Well-known functions or constructions will not necessarily be described in detail for brevity and/or clarity.

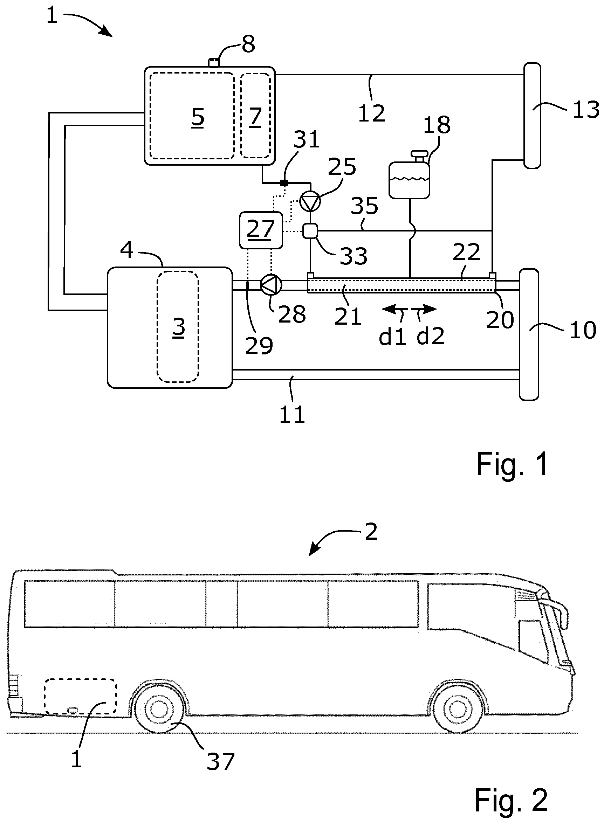

Fig. 1 schematically illustrates an electric powertrain 1, according to some embodiments. For the reason of brevity, the electric powertrain 1 is in some places herein referred to as "the powertrain 1". Thus, throughout this disclosure, the wording "powertrain 1" may be replaced by the wording "electric powertrain 1". The powertrain 1 comprises an electric machine 3, e.g. an electric motor. The electric machine 3 may be configured to provide motive power to a vehicle comprising the powertrain 1, as is further explained herein. In addition, according to some embodiments, the powertrain 1 may comprise an additional power source, such as an internal combustion engine, for example a compression ignition engine, such as a diesel engine, or an Otto engine with a spark-ignition device, wherein the Otto engine may be configured to run on gas, petrol, alcohol, similar volatile fuels, or combinations thereof.

According to the illustrated embodiments, the electric machine 3 is arranged in an electrical transmission 4 of the powertrain 1. The powertrain comprises electronic components 5, 7 configured to power the electric machine 3, i.e. configured to supply electricity to the electric machine 3. According to the illustrated embodiments, the electronic components 5, 7 comprise a battery 5 and power electronics 7. According to further embodiments, the electronic components 5, 7 may comprise two or more batteries 5. The battery 5 is a rechargeable battery configured to be charged via an electrical connection 8. The electronic components 5, 7 may comprise a charger in electrical contact with the electrical connection 8 and the battery 5, wherein the charger is configured to charge the battery 5 using electricity supplied to the electrical connection 8. The charger and the battery 5 generates heat during the charging.

The powertrain 1 further comprises a first coolant circuit 11. According to the illustrated embodiments, the first coolant circuit 11 is configured to cool and lubricate the electric machine 3 and the electrical transmission 4. The first coolant circuit 11 comprises coolant channels in heat exchanging contact with portions of the electric machine 3 and portions of the electrical transmission 4. The coolant channels may for example extend around a stator of the electric machine 3. The coolant channels may further comprise lubrication portions at moving parts of the electric machine 3 and the electrical transmission 4, such as shafts, gears, bearings, and the like. The first coolant circuit 11 further comprises ducts, a radiator 10 arranged to dissipate heat of coolant in the first coolant circuit 11, and a circulation pump 28 arranged to pump coolant through the first coolant circuit 11. The coolant of the first coolant circuit 11 may comprise oil, such as fully synthetic, semi-synthetic, or mineral oil for transmissions, such as for example automatic transmissions.

The powertrain 1 further comprises a second coolant circuit 12 configured to cool the electronic components 5, 7, i.e. according to the illustrated embodiments, the battery 5 and the power electronics 7. The second coolant circuit 12 comprises coolant channels in heat exchanging contact with portions of the electronic components 5, 7. The coolant channels may for example extend through portions of the battery 5, such as cells of the battery 5, and through portions of the power electronics 7. The second coolant circuit 12 further comprises ducts, a radiator 13 arranged to dissipate heat of coolant in the second coolant circuit 12, and a circulation pump 25 arranged to pump coolant through the second coolant circuit 12. The coolant of the second coolant circuit 12 may comprise a water-based coolant, such as a mixture of water and glycol.

The powertrain 1 further comprises a heat exchanger 20 configured to exchange heat between the first and second coolant circuits 11, 12. According to the illustrated embodiments, the heat exchanger 20 comprises a first and a second passage 21, 22. The first passage 21 is arranged to conduct coolant flowing in the first coolant circuit 11, and the second passage 22 is arranged to conduct coolant flowing in the second coolant circuit 12. Furthermore, as indicated in Fig. 1, the first passage 21 is arranged to conduct coolant in a first flow direction d1 and the second passage 22 is arranged to conduct coolant in a second flow direction d2. The second flow direction d2 is opposite to the first flow direction d1. In this manner, an efficient heat transfer is provided between the second and first coolant circuits 12, 11.

Furthermore, as can be seen in Fig. 1, the first and second passages 21, 22 are coaxially arranged, and the second passage 22 is coaxially arranged around the first passage 21. Thereby, an efficient heat transfer is provided between the second and first coolant circuits 12, 11 in a cost-efficient manner. In addition, the first passage 21 is provided with a greater cross-sectional area than the second passage 22. This because the first passage 21 is arranged to conduct coolant at a higher flowrate than the second passage 22. Thus, by arranging the second passage 22 coaxially around the first passage 21, a greater surface area between the first and second passages 21, 22 is provided, than would be the case otherwise. As a result thereof, a more efficient heat transfer is provided from the second passage 22 to the first passage 21. According to the illustrated embodiments, the powertrain 1 comprises an expansion tank 18 fluidly connected to the second coolant circuit 12. In this manner, unwanted pressure build-ups in the second coolant circuit 12 are avoided.

As is further explained herein, according to the illustrated embodiments, the powertrain 1 is configured to transfer heat from the second coolant circuit 12 to the first coolant circuit 11 during charging of the battery 5, using the heat exchanger 20. In other words, the powertrain 1 is configured to transfer heat from the second coolant circuit 12 to the first coolant circuit 11, via the heat exchanger 20, during charging of the battery 5. Furthermore, according to the illustrated embodiments, the powertrain 1 comprises a control arrangement 27 configured to estimate a temperature of coolant in the first coolant circuit 11. The control arrangement 27 may estimate the temperature of coolant in the first coolant circuit 11 using input from a sensor 29 arranged in heat exchanging contact with coolant in the first coolant circuit 11. As an alternative, or in addition, the control arrangement 27 may estimate the temperature of coolant in the first coolant circuit 11 using input from a sensor arranged at another location of the powertrain 1, and/or a sensor arranged at another location of a vehicle comprising the powertrain 1. As a further alternative, or in addition, the control arrangement 27 may estimate the temperature of coolant in the first coolant circuit 11 by receiving weather information from an external sender.

The control arrangement 27 is configured to activate the circulation pump 25 of the second coolant circuit 12 in case the estimated temperature is below a first threshold temperature. In this manner, the powertrain 1 will heat the coolant in the first coolant circuit 11, in an energy efficient manner, only when needed, i.e. when the estimated temperature is below the first threshold temperature. Purely as an example, the first threshold temperature may be within the range of -5 to 10 degrees Celsius, such as within the range of 0 to 7 degrees Celsius.

According to some embodiments, the control arrangement 27 is configured to activate the circulation pump 28 of the first coolant circuit 11 when the estimated temperature of coolant in the first coolant circuit 11 rises above a second threshold temperature. Purely as an example, the second threshold temperature may be within the range of 11 to 40 degrees Celsius, such as within the range of 15 to 25 degrees Celsius. Thereby, the circulation pump 28 of the first coolant circuit 11 can be started in a safe manner with a reduced risk of harmful pressure peaks. In addition, because of the activation of the circulation pump 28 of the first coolant circuit 11, a more even heat distribution in the coolant of the first coolant circuit 11 can be provided.

Furthermore, the control arrangement 27 may be configured to estimate a temperature of coolant in the second coolant circuit 12, for example by using input from a sensor 31 arranged in heat exchanging contact with coolant of the second coolant circuit 12. According to such embodiments, the control arrangement 27 may be configured to activate the circulation pump 25 of the second coolant circuit 12 only when the estimated temperature of coolant in the second coolant circuit 12 is above a third threshold temperature. Purely as an example, the third threshold temperature may be within the range of 10 to 30 degrees Celsius, such as within the range of 15 to 25 degrees Celsius. In this manner, an even more energy efficient powertrain 1 is provided because the circulation pump 25 of the second coolant circuit 12 is only activated when sufficient heat is available in the second coolant circuit 12.

According to the illustrated embodiments, the control arrangement 27 is configured to activate the circulation pump 25 of the second coolant circuit 12 in case the battery 5 is charging and the estimated temperature of coolant in the first coolant circuit 11 is below a first threshold temperature. In this manner, coolant of the first coolant circuit 11 is heated using waste heat of the battery 5 and/or the charger, for example when a vehicle comprising the powertrain 1 is parked in a cold environment for an extended period. Due to the heating of the coolant of the first coolant circuit 11, the viscosity of the coolant is lowered. Thereby, in a subsequent start-up phase of the powertrain 1, the coolant can be pumped with lower resistance through the first coolant circuit 11 and the risk for harmful pressure peaks is reduced.

According to the illustrated embodiments, the second coolant circuit 12 of the powertrain 1 comprises a directional valve 33 and a by-pass conduit 35 by-passing the heat exchanger 20. The directional valve 33 is controllable between a first position and a second position by the control arrangement 27. In the first position, the directional valve 33 opens a fluid connection to the first passage 21 of the heat exchanger 20 and closes a fluid connection to the by-pass conduit 35. In the second position, the directional valve 33 closes the fluid connection to the first passage 21 of the heat exchanger 20 and opens the fluid connection to the by-pass conduit 35. Thus, according to these embodiments, the activation of the circulation pump 25 of the second coolant circuit 12 may also encompass a control of the directional valve 33 to the first position. The control arrangement 27 may control the directional valve 33 to the second position, when no heat is to be transferred from the second coolant circuit 12 to the first coolant circuit 11, such as for example during driving of a vehicle comprising the powertrain 1. When the directional valve 33 is in the second position, the coolant in the second coolant circuit 12 is flowing from the circulation pump 25 to the radiator 13 without passing the first passage 21 of the heat exchanger 20.

Fig. 2 illustrates a vehicle 2, according to some embodiments. The vehicle 2 comprises a powertrain 1 according to the embodiments illustrated Fig. 1. The powertrain 1 is configured to provide motive power to the vehicle 2, via wheels 37 of the vehicle 2. According to the illustrated embodiments, the vehicle 2 is a bus. However, according to further embodiments, the vehicle 2, as referred to herein, may be another type of manned or unmanned vehicle for land or water based propulsion such as a lorry, a truck, a construction vehicle, a tractor, a car, a ship, a boat, or the like.

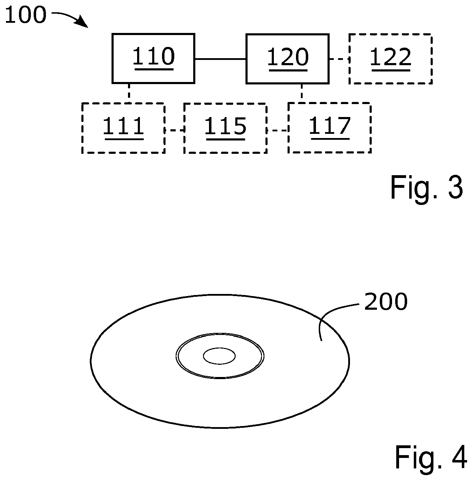

Fig. 3 illustrates a method 100 of controlling temperature of coolant of an electric powertrain of a vehicle. The powertrain 1 may be a powertrain 1 according to the embodiments illustrated in Fig. 1 and Fig. 2. Therefore, below, reference is made to Fig. 3 as well as to Fig. 1 and Fig. 2. The method 100, illustrated in Fig. 3, is a method 100 of controlling temperature of coolant of an electric powertrain 1 of a vehicle 2, wherein the powertrain 1 comprises an electric machine 3, a battery 5 configured to power the electric machine 3, a first coolant circuit 11 configured to cool the electric machine 3, a second coolant circuit 12 configured to cool the battery 5, and a heat exchanger 20 configured to exchange heat between the first and second coolant circuits 11, 12. The method 100 comprises the steps of:
- estimating 110 a temperature of coolant in the first coolant circuit 11, and
- transferring 120 heat from the second coolant circuit 12 to the first coolant circuit 11 in case the battery 5 is charging and the estimated temperature is below a first threshold temperature.

According to some embodiments, the second coolant circuit 12 comprises a circulation pump 25, and wherein the step of transferring 120 heat from the second coolant circuit 12 to the first coolant circuit 11 comprises the step of:
- activating 115 the circulation pump 25 of the second coolant circuit 12.

According to some embodiments, the method 100 further comprises the step of:
- estimating 111 a temperature of coolant in the second coolant circuit 12, and
- activating 117 the circulation pump 25 of the second coolant circuit 12 only when the estimated temperature of coolant in the second coolant circuit 12 is above a third threshold temperature.

According to some embodiments, the first coolant circuit 11 comprises a circulation pump 28, and wherein the method 100 further comprises:
- activating 122 the circulation pump 28 of the first coolant circuit 11 when the estimated temperature of coolant in the first coolant circuit 11 rises above a second threshold temperature.

It will be appreciated that the various embodiments described for the method 100 are all combinable with the control arrangement 27 as described herein. That is, the control arrangement 27 may be configured to perform any one of the method steps 110, 111, 115, 117, 120, and 122 of the method 100.

Fig. 4 illustrates computer-readable medium 200 comprising instructions which, when executed by a computer, cause the computer to carry out the method 100 according to some embodiments.

According to some embodiments, the computer-readable medium 200 comprises a computer program comprising instructions which, when the program is executed by a computer, cause the computer to carry out the method 100 according to some embodiments.

Below, simultaneous reference is made to Fig. 1 - Fig. 4. The control arrangement 27 may be connected to one or more components of the powertrain 1, and/or one or more components of the vehicle 2 comprising the powertrain 1 in order to perform the method 100 illustrated in Fig. 4.

One skilled in the art will appreciate that the method 100 of controlling temperature of coolant of the electric powertrain 1 may be implemented by programmed instructions. These programmed instructions are typically constituted by a computer program, which, when it is executed in the control arrangement 27, ensures that the control arrangement 27 carries out the desired control, such as the method steps 110, 111, 115, 117, 120, and 122 described herein. The computer program is usually part of a computer program product 200 which comprises a suitable digital storage medium on which the computer program is stored.

The control arrangement 27 may comprise a calculation unit which may take the form of substantially any suitable type of processor circuit or microcomputer, e.g. a circuit for digital signal processing (digital signal processor, DSP), a Central Processing Unit (CPU), a processing unit, a processing circuit, a processor, an Application Specific Integrated Circuit (ASIC), a microprocessor, or other processing logic that may interpret and execute instructions. The herein utilised expression "calculation unit" may represent a processing circuitry comprising a plurality of processing circuits, such as, e.g., any, some or all of the ones mentioned above.

The control arrangement 27 may further comprise a memory unit, wherein the calculation unit may be connected to the memory unit, which may provide the calculation unit with, for example, stored program code and/or stored data which the calculation unit may need to enable it to do calculations. The calculation unit may also be adapted to store partial or final results of calculations in the memory unit. The memory unit may comprise a physical device utilised to store data or programs, i.e., sequences of instructions, on a temporary or permanent basis. According to some embodiments, the memory unit may comprise integrated circuits comprising silicon-based transistors. The memory unit may comprise e.g. a memory card, a flash memory, a USB memory, a hard disc, or another similar volatile or non-volatile storage unit for storing data such as e.g. ROM (Read-Only Memory), PROM (Programmable Read-Only Memory), EPROM (Erasable PROM), EEPROM (Electrically Erasable PROM), etc. in different embodiments.

The control arrangement 27 is connected to components of the powertrain 1 for receiving and/or sending input and output signals. These input and output signals may comprise waveforms, pulses or other attributes which the input signal receiving devices can detect as information and which can be converted to signals processable by the control arrangement 27. These signals may then be supplied to the calculation unit. One or more output signal sending devices may be arranged to convert calculation results from the calculation unit to output signals for conveying to other parts of the vehicle's control system and/or the component or components for which the signals are intended. Each of the connections to the respective components of the powertrain 1 for receiving and sending input and output signals may take the form of one or more from among a cable, a data bus, e.g. a CAN (controller area network) bus, a MOST (media orientated systems transport) bus or some other bus configuration, or a wireless connection.

In the embodiments illustrated, the powertrain 1 comprises a control arrangement 27 but might alternatively be implemented wholly or partly in two or more control arrangements or two or more control units.

Control systems in modern vehicles generally comprise a communication bus system consisting of one or more communication buses for connecting a number of electronic control units (ECUs), or controllers, to various components on board the vehicle. Such a control system may comprise a large number of control units and taking care of a specific function may be shared between two or more of them. Vehicles of the type here concerned are therefore often provided with significantly more control arrangements than depicted in Fig. 1, as one skilled in the art will surely appreciate.

The computer program product 200 may be provided for instance in the form of a data carrier carrying computer program code for performing at least some of the method steps 110, 111, 115, 117, 120, and 122 according to some embodiments when being loaded into one or more calculation units of the control arrangement 27. The data carrier may be, e.g. a CD ROM disc, as is illustrated in Fig. 4, or a ROM (read-only memory), a PROM (programable read-only memory), an EPROM (erasable PROM), a flash memory, an EEPROM (electrically erasable PROM), a hard disc, a memory stick, an optical storage device, a magnetic storage device or any other appropriate medium such as a disk or tape that may hold machine readable data in a non-transitory manner. The computer program product may furthermore be provided as computer program code on a server and may be downloaded to the control arrangement 27 remotely, e.g., over an Internet or an intranet connection, or via other wired or wireless communication systems.

It is to be understood that the foregoing is illustrative of various example embodiments and that the invention is defined only by the appended claims. A person skilled in the art will realize that the example embodiments may be modified, and that different features of the example embodiments may be combined to create embodiments other than those described herein, without departing from the scope of the present invention, as defined by the appended claims.

As used herein, the term "comprising" or "comprises" is open-ended, and includes one or more stated features, elements, steps, components or functions but does not preclude the presence or addition of one or more other features, elements, steps, components, functions or groups thereof.

## Claims

1. An electric powertrain (1) for a vehicle (2), wherein the powertrain (1) comprises:
- an electric machine (3),
- electronic components (5, 7) configured to power the electric machine (3),
- a first coolant circuit (11) configured to cool the electric machine (3),
- a second coolant circuit (12) configured to cool the electronic components (5, 7), and
- a heat exchanger (20) configured to exchange heat between the first and second coolant circuits (11, 12).

2. The powertrain (1) according to claim 1, wherein the electronic components (5, 7) comprise a battery (5), and wherein the powertrain (1) is configured to transfer heat from the second coolant circuit (12) to the first coolant circuit (11) during charging of the battery (5).

3. The powertrain (1) according to claim 1 or 2, wherein the powertrain (1) comprises an expansion tank (18) fluidly connected to the second coolant circuit (12).

4. The powertrain (1) according to any one of the preceding claims, wherein the heat exchanger (20) comprises a first and a second passage (21, 22), and wherein the first passage (21) is arranged to conduct coolant flowing in the first coolant circuit (11), and the second passage (22) is arranged to conduct coolant flowing in the second coolant circuit (12).

5. The powertrain (1) according to claim 3 and 4, wherein the expansion tank (18) is fluidly connected to the second passage (22).

6. The powertrain (1) according to claim 4 or 5, wherein the first passage (21) is arranged to conduct coolant in a first flow direction (d1) and the second passage (22) is arranged to conduct coolant in a second flow direction (d2), and wherein the second flow direction (d2) is opposite to the first flow direction (d1).

7. The powertrain (1) according to any one the claims 4 - 6, wherein the first and second passages (21, 22) are coaxially arranged.

8. The powertrain (1) according to claim 7, wherein the second passage (22) is coaxially arranged around the first passage (21).

9. The powertrain (1) according to any one of the preceding claims, wherein the second coolant circuit (12) comprises a circulation pump (25), wherein the powertrain (1) comprises a control arrangement (27) configured to estimate a temperature of coolant in the first coolant circuit (11), and wherein the control arrangement (27) is configured to activate the circulation pump (25) of the second coolant circuit (12) in case the estimated temperature is below a first threshold temperature.

10. The powertrain (1) according to claim 9, wherein the first coolant circuit (11) comprises a circulation pump (28), and wherein the control arrangement (27) is configured to activate the circulation pump (28) of the first coolant circuit (11) when the estimated temperature of coolant in the first coolant circuit (11) rises above a second threshold temperature.

11. A vehicle (2) comprising an electric powertrain (1) according to any one of the preceding claims.

12. A method (100) of controlling temperature of coolant of an electric powertrain (1),
wherein the powertrain (1) comprises:
- an electric machine (3),
- a battery (5) configured to power the electric machine (3),
- a first coolant circuit (11) configured to cool the electric machine (3),
- a second coolant circuit (12) configured to cool the battery (5), and
- a heat exchanger (20) configured to exchange heat between the first and second coolant circuits (11, 12),
wherein the method (100) comprises the steps of:
- estimating (110) a temperature of coolant in the first coolant circuit (11), and
- transferring (120) heat from the second coolant circuit (12) to the first coolant circuit (11) in case the battery (5) is charging and the estimated temperature is below a first threshold temperature.

13. The method (100) according to claim 12, wherein the second coolant circuit (12) comprises a circulation pump (25), and wherein the step of transferring (120) heat from the second coolant circuit (12) to the first coolant circuit (11) comprises the step of:
- activating (115) the circulation pump (25) of the second coolant circuit (12).

14. The method (100) according to claim 12 or 13, wherein the first coolant circuit (11) comprises a circulation pump (28), and wherein the method (100) further comprises the step of:
- activating (122) the circulation pump (28) of the first coolant circuit (11) when the estimated temperature of coolant in the first coolant circuit (11) rises above a second threshold temperature.

15. A computer program comprising instructions which, when the program is executed by a computer, cause the computer to carry out the method (100) according any one of the claims 12 - 14.

16. A computer-readable medium (200) comprising instructions which, when executed by a computer, cause the computer to carry out the method (100) according any one of the claims 12 - 14.
